# EUROPÄISCHE PATENTSCHRIFT

(11) **EP 3 161 921 B1**
(45) Veröffentlichungstag und Bekanntmachung des Hinweises auf die Patenterteilung: **07.12.2022**
(21) Anmeldenummer: 14758812.3
(22) Anmeldetag: 20.08.2014
(51) Int. Cl.: H02H 7/125, H02H 7/26, H02J 1/10, H02J 3/36, H02H 3/02, H02H 3/44, H02H 7/28

(54) **VERFAHREN ZUM UNTERBRECHEN EINES ELEKTRISCHEN STROMES IN EINER GLEICHSPANNUNGSLEITUNG UND ANWENDUNG DES VERFAHRENS**
METHOD FOR INTERRUPTING AN ELECTRIC CURRENT IN A DC LINE AND APPLICATION OF SAID METHOD
PROCÉDÉ PERMETTANT D'INTERROMPRE UN COURANT ÉLECTRIQUE DANS UNE LIGNE DE TENSION CONTINUE ET UTILISATION DU PROCÉDÉ

(43) Veröffentlichungstag der Anmeldung: 03.05.2017
(73) Patentinhaber: Siemens Energy Global GmbH & Co. KG, 81739 München (DE)
(72) Erfinder: MENKE, Peter, 96237 Oberfüllbach (DE); SCHETTLER, Frank, 91058 Erlangen (DE); DORN, Jörg, 96155 Buttenheim (DE); DÖRING, David, 91058 Erlangen (DE); ERGIN, Dominik, 91083 Baiersdorf (DE); KNAAK, Hans-Joachim, 91054 Erlangen (DE)
(86) Internationale Anmeldenummer: PCT/EP2014/067735
(87) Internationale Veröffentlichungsnummer: WO 2016/026524

(56) Entgegenhaltungen:
- US-A1- 2013 128 636
- US-A1- 2013 193 766

## Beschreibung

Die Erfindung betrifft ein Verfahren nach Anspruch zum Unterbrechen eines elektrischen Stromes in einer mit einem Gleichspannungsanschluss eines Umrichters verbundenen Gleichspannungsleitung, bei dem in einem Fehlerfall der Gleichspannungsleitung ein gleichspannungsseitiger Umrichterstrom auf einen Stromsollwert geregelt wird, der kleiner als ein Normalbetrieb-Stromsollwert ist, und eine gleichspannungsseitige Umrichterspannung auf einen Spannungssollwert geregelt wird, der kleiner als ein Normalbetrieb-Spannungssollwert ist.

Ein Beispiel eines Fehlerfalls in der Gleichspannungsleitung ist ein thermischer Durch- oder Überschlag, wie beispielsweise eine Erdberührung einer Freileitung in einer Hochspannungsgleichstromübertragungsanlage (HGÜ) aufgrund von Nässe und/oder Verschmutzung von Isolatoren.

Es ist oftmals notwendig, die Gleichspannungsleitung im Fehlerfall zu trennen.

Aus der WO 2012/103936 A1 ist bekannt, zur Unterbrechung des Stromes in einer Gleichspannungsleitung, die mit einem mit Vollbrücken-Modulen ausgestatteten selbstgeführten Umrichter verbunden ist, den Umrichter im Fehlerfall derart anzusteuern bzw. zu blockieren, dass durch eine vom Umrichter erzeugte Gegenspannung der Strom in der Gleichspannungsleitung begrenzt wird. Anschließend kann die Gleichspannungsleitung im Wesentlichen stromlos getrennt werden.

Aus der Druckschrift DE 1 933 943 A ist ein Verfahren der eingangs genannten Art bekannt. Dort wird vorgeschlagen, im Falle eines Kurzschlusses in der Gleichspannungsleitung eines Gleichspannungsnetzes den Umrichterstrom auf einen Stromsollwert zu regeln, der einen Wert von 0,1 bzw. 0,2 eines Normal betrieb-Stromsollwertes, das heißt desjenigen Stromsollwertes, der in einem ungestörten Normalbetrieb des Umrichters verwendet wird, aufweist. Zugleich wird vorgeschlagen, die Umrichterspannung im Fehlerfall auf einen Spannungssollwert zu regeln, der gegenüber einer Normalbetrieb-Spannungssollwert herabgesetzt ist. Eine in der Gleichspannungsleitung angeordnete Schaltvorrichtung der DE 1 933 943 A unterbricht den auf etwa 4 kA begrenzten Strom in der Gleichspannungsleitung anschließend. Allerdings sind Schaltvorrichtungen mit einem Maximalabschaltstrom von 4 kA aufwendig in Herstellung und Betrieb.

In diesem Zusammenhang ist zu erwähnen, dass eine derartige Regelung dann anwendbar ist, wenn der Umrichter unmittelbar mit der Gleichspannungsleitung verbunden ist; denn ein Maschenstrom in einer sich beispielsweise zwischen zwei Knoten eines vermaschten Gleichspannungsnetzes angeordneten Gleichspannungsleitung ist im Allgemeinen nicht hinreichend genau regelbar. Aufgrund der vermaschten Struktur des Gleichspannungsnetzes unterliegt der Maschenstrom in einem solchen Fall der gleichzeitiger Wirkung der Regelungen und Störgrößen mehrerer Umrichter, so dass schwer kontrollierbare Schwankungen des Maschenstromes zu erwarten sind.

In der US 2013/0193766 A1 wird vorgeschlagen, gleichspannungsseitig des Umrichters eine Stromschwingung bzw. eine Spannungsschwingung zu erzeugen, um bei entsprechenden Nulldurchgängen einen mechanischen Schalter in der Gleichspannungsleitung schalten zu können.

Ferner wird in der US 2013/0128636 A1 vorgeschlagen, in einem Fehlerfall die Ströme in den Umrichterphasen des Umrichters derart zu regeln, dass diese sich in den gemeinsamen Sternpunkten der Umrichterphasen gegenseitig aufheben.

Die Aufgabe der Erfindung besteht darin, ein artgemäßes Verfahren vorzuschlagen, das einen kostengünstigeren Betrieb des Umrichters bzw. der Gleichspannungsleitung erlaubt.

Die Aufgabe wird bei einem Verfahren der eingangs genannten Art erfindungsgemäß dadurch gelöst, dass der vorgegebene Stromsollwert zumindest zeitweise gleich null gesetzt wird und der vorgegebene Spannungssollwert zeitweise gleich null gesetzt wird.

Die Erfindung liegt der Erkenntnis zugrunde, dass die Anregung durch den Fehler zur Bildung eines Strom- und eines Spannungspulses führen kann, die sich in der Gleichspannungsleitung zwischen dem Umrichter und dem Fehlerort ausbreiten. Falls der Umrichter eine Gegenspannung ausbildet, um den Strom in der Gleichspannungsleitung zu begrenzen, so wirkt der Umrichter wie offenes Leitungsende. Zugleich wirkt die Fehlerstelle bei niederohmigen Fehlern wie ein kurzgeschlossenes Leitungsende, so dass in der Gleichspannungsleitung eine schwach gedämpfte Strom- sowie eine Spannungsschwingung mit relativ hohen Amplituden entstehen (beispielsweise Spannungen bis zum zweifachen Spannungsnennwert). Die Dämpfung ergibt sich lediglich durch die Verluste im Umrichter, der Gleichspannungsleitung und am Fehlerort. Die Stromschwingung kann eine Schwingungsperiode von weniger als 10 ms aufweisen. Beim Trennen der Gleichspannungsleitung mittels der Schaltvorrichtung, beispielsweise in einem vorhandenen Stromnulldurchgang, kann es daher nach kurzer Zeit zu einer Überschreitung einer Verfestigungsspannung der Schaltvorrichtung und damit zu einer Wiederzündung von Lichtbögen führen. Die Abklingzeit der Schwingung kann in der Größenordnung von bis zu einer Sekunde liegen.

Bei dem erfindungsgemäßen Verfahren ist daher mit anderen Worten der zeitliche Verlauf des Stromsollwertes derart zu wählen, dass dieser zumindest für gewisse Zeiten den Wert null annimmt und der zeitliche Verlauf des Spannungssollwertes derart zu wählen, dass dieser für gewisse Zeiten den Wert null annimmt. Dies kann nicht erfindungsgemäß auch den Fall einschließen, in dem der Stromsollwert konstant auf null gesetzt wird. Erfindungsgemäß weist der Stromsollwert einen zeitlich variierenden Verlauf mit Null-durchgängen auf. Ähnlich weist der Spannungssollwert einen zeitlich variierenden Verlauf mit Nulldurchgängen auf. Mittels des erfindungsgemäßen Verfahrens wird durch die Vorgabe des Stromsollwertes und des Spannungssollwertes demnach die Stromschwingung in der Gleichspannungsleitung nach Fehlerantritt gedämpft, wobei die Regelung für eine Leistungsaufnahme des Umrichters sorgt. Dabei sollten der Strom- und ggf. der Spannungssollwert im gesamten Zeitverlauf geeigneterweise stets unter entsprechenden Maximalwerten bleiben, die aufgrund ihrer Auslegung für die Gleichspannungsleitung und den Umrichter zulässig sind.

Durch die aktive, zumindest zeitweise Nullregelung des Umrichterstromes und zeitweise Nullregelung der Umrichterspannung im Fehlerfall kann die fehlerbehaftete Gleichspannungsleitung entsprechend zumindest zeitweise strom- und im Wesentlichen auch spannungslos gemacht werden. Die aufgrund von Leitungsinduktivitäten in der Gleichspannungsleitung gespeicherte Energie wird auf diese Weise entladen. Dies erlaubt vorteilhaft den Einsatz beliebiger Schaltvorrichtungen zur Trennung der Gleichspannungsleitung. Insbesondere sind auch solche Schaltvorrichtungen einsetzbar, die einen relativ niedrigen Maximalabschaltstrom aufweisen und daher kostengünstig sind. Dadurch können die Betriebskosten des Umrichters und der Gleichspannungsleitung vorteilhaft gesenkt werden.

Mit der Dämpfung der Stromschwingung in der fehlerbehafteten Gleichspannungsleitung ist zudem eine Verkürzung der Zeit bis zu einer möglichen Wiederzuschaltung der Gleichspannungsleitung verbunden. Nachteilige Rückwirkungen auf ein wechselspannungsseitig an den Umrichter angeschlossenes Wechselspannungsnetz lassen sich somit verringern. Die Wiederzuschaltung der Gleichspannungsleitung wird nach einer Beseitigung des Fehlers vorgenommen.

Bevorzugt wird die Gleichspannungsleitung mittels einer in der Gleichspannungsleitung angeordneten Schaltvorrichtung getrennt. Mit dieser Maßnahme kann die Fehlerstelle in der Gleichspannungsleitung gegebenenfalls von funktionsfähigen Leitungen abgetrennt werden.

Eine vorteilhafte Ausführungsform der Erfindung sieht vor, dass die Schaltvorrichtung als ein Trennschalter realisiert wird. Der Trennschalter ist zu einem nahezu leistungslosen Trennen der Gleichspannungsleitung geeignet. Bei einem Trennvorgang unter Last würde der Trennschalter aufgrund eines darin auftretenden Lichtbogens unter Umständen zerstört werden. Beispielsweise weist der Trennschalter einen Maximalabschaltstrom von weniger als 0,1 kA auf. In diesem Fall sorgt das zumindest zeitweise Setzen des Stromsollwertes auf null und/oder das zeitweise Setzen des Spannungssollwertes auf null dafür, dass der Trennschalter die Gleichspannungsleitung trennen kann. Trennschalter sind im Allgemeinen kostengünstiger als Leistungsschalter, weil bei der Herstellung von Trennschaltern insbesondere auf kostenintensive Lichtbogenlöschvorrichtungen verzichtet werden kann. Bei dieser Ausführungsform des Verfahrens kann der Trennschalter nach dem Erlöschen des Lichtbogens geöffnet werden.

Erfindungsgemäß entspricht der Stromsollwert einem ersten periodischen Signal mit Nulldurchgängen. Beispielsweise kann als der Stromsollwert ein Sinussignal verwendet werden. Dabei sorgen die Nulldurchgänge des Stromsollwertes für eine Löschung von Lichtbögen in der Schaltvorrichtung. Zweckmäßigerweise kann die Periode des ersten periodischen Signals entsprechend der Ausgestaltung der Schaltvorrichtung gewählt werden. Beispielsweise kann bei Verwendung eines üblichen Wechselspannungsschalters die Periode des ersten periodischen Signals 50 Hz oder 60 Hz entsprechen. Anstelle eines Sinussignals kann jedoch auch jedes andere periodische Signal, wie beispielsweise ein periodisches Rechtecksignal verwendet werden.

Erfindungsgemäß ist die Amplitude des ersten periodischen Signals nicht konstant, sondern wird in der Zeit variiert.

Sie kann beispielsweise stufenweise und/oder verzögert nach dem Fehlerzeitpunkt erhöht werden. Auf diese Weise kann eine Belastung des Umrichters aufgrund eines unter Umständen anfänglich hohen Fehlerstromes verringert werden.

Erfindungsgemäß entspricht der Spannungssollwert einem zweiten periodischen Signal mit Nulldurchgängen. Das zweite periodische Signal kann alle zuvor für das erste periodische Signal beschriebenen Eigenschaften aufweisen. Das erste und das zweite periodische Signal müssen jedoch nicht gleich beschaffen sein, sondern können voneinander abweichende Verläufe aufweisen.

Erfindungsgemäß ist die Amplitude des zweiten periodischen Signals nicht konstant, sondern wird in der Zeit variiert.

Gemäß einer vorteilhaften Ausführungsform der Erfindung wird das Verfahren bzw. die Regelung auf den Stromsollwert und den Spannungssollwert eingeleitet, wenn eine vorgegebene Fehlerbedingung erfüllt ist. Dadurch kann das Verfahren gezielt eingesetzt werden, wenn eine Notwendigkeit zur Unterbrechung des Stromes in der Gleichspannungsleitung gegeben ist. Wird dementsprechend ausgehend von einem Normalbetrieb des Umrichters mit einem üblichen Regelungsverfahren auf das erfindungsgemäße Verfahren umgestellt, so kann dies beispielsweise mittels einer geeigneten FRT-Vorrichtung (Fault Ride Through-Vorrichtung) erfolgen. Wird eine Stellgröße des Regelungsverfahrens, beispielsweise eine Stellspannung mittels eines PI-Reglers anhand einer Differenz zwischen einem vorgegebenen Sollwert und einem gemessenen Istwert erzeugt, so kann die FRT-Vorrichtung die Vorgabe des Sollwertes steuern, wobei sie zwischen dem Stromsollwert und dem Spannungssollwert des erfindungsgemäßen Verfahrens und dem/den Sollwert/-en des üblichen Regelungsverfahrens schaltet.

Bevorzugt wird als die Fehlerbedingung ein Überschreiten eines vorgegebenen Stromschwellenwertes in der Gleichspannungs leitung verwendet. Denkbar ist ebenfalls, eine andere Fehlerbedingung zu verwenden, beispielsweise einen vorgegebenen, zu unterschreitenden Spannungsschwellenwert. Auch können Schwellenwerte von Stromanstieg und/oder Spannungsabfall verwendet werden. Dabei hängt es im Allgemeinen vom gegebenen Schwellenwert ab, ob die Fehlerbedingung beim Überschreiten oder Unterschreiten des Schwellenwertes erfüllt wird.

Vorteilhafterweise wird mittels einer in der Gleichspannungsleitung angeordneten Fehlererfassungsvorrichtung überprüft, ob die Fehlerbedingung erfüllt ist. Die Fehlererfassungsvorrichtung kann beispielsweise an der Gleichspannungsleitung oder im Umrichter angeordnet sein und die für die Fehlerbedingung maßgeblichen Parameterwerte (wie Strom oder Spannung bzw. deren Änderungen) ermitteln. Es ist ebenfalls denkbar, mehrere Fehlererfassungsvorrichtungen einzusetzen, die voneinander beabstandet entlang der Gleichspannungsleitung und/oder an dem Umrichter angeordnet sind.

Gemäß einer bevorzugten Ausführungsform der Erfindung wird der gleichspannungsseitige Umrichterstrom mittels einer Messeinheit erfasst und als Iststrom einer ausgangsseitig mit einer Steuereinheit zum Ansteuern von Umrichterventilen verbundenen Regelungseinheit des Umrichters zugeführt. Beispielsweise kann eine zur Regelung des Umrichters in einem Normalbetrieb eingerichtete Regelungseinheit die Regelung auch im Fehlerfall übernehmen.

Besonders vorteilhaft kann das erfindungsgemäße Verfahren in einem radialen oder vermaschten Gleichspannungsnetz mit wenigstens einem Gleichspannungsknoten, zu dem die Gleichspannungsleitung führt, eingesetzt werden.

Von einem radialen Gleichspannungsnetz wird in diesem Zusammenhang gesprochen, wenn mehrere Gleichspannungsleitungen miteinander in einem Verbindungspunkt, der als Knoten bezeichnet wird, verbunden sind.

Von einem vermaschten Gleichspannungsnetz wird in diesem Zusammenhang gesprochen, wenn mehrere Gleichspannungsleitungen miteinander in wenigstens zwei Knoten verbunden sind oder mindestens zwei Umrichter jeweils zwei Verbindungen zu anderen Umrichtern aufweisen (wenn also das Netz nach Trennung einer der Gleichspannungsleitungen nicht in zwei Teile zerfällt). Jede Gleichspannungsleitung des Gleichspannungsnetzes verbindet beispielsweise einen der Knoten mit einem ihr zugeordneten Umrichter. Jeder Umrichter ist dabei gleichspannungsseitig mit der zugeordneten Gleichspannungsleitung und wechselspannungsseitig mit einem Wechselspannungsnetz verbunden.

Kommt es in einem radialen oder vermaschten Gleichspannungsnetz zu einem Fehler in einer der Gleichspannungsleitungen, so ist es sinnvoll, die fehlerbehaftete Gleichspannungsleitung vom Gleichspannungsnetz zu trennen. Ansonsten könnte der Fehler zu einem Ausfall des gesamten Netzes führen. Zu den häufigsten Fehlern gehören Kurzschlüsse in den Gleichspannungsleitungen, beispielsweise wenn ein umgefallener Baum eine Erdberührung einer Freileitung verursacht. Kann die fehlerbehaftete Gleichspannungsleitung vom Netz getrennt werden, so kann der Betrieb der übrigen Gleichspannungsleitungen des Gleichspannungsnetzes aufrechterhalten oder zumindest schneller wiederhergestellt werden. Es ist daher von Vorteil, in der Nähe eines Knotens des Gleichspannungsnetzes zumindest eine Schaltvorrichtung in der Gleichspannungsleitung vorzusehen. Die Schaltvorrichtung kann dazu verwendet werden, die Gleichspannungsleitung im Fehlerfall, beispielsweise einem Kurzschluss, zu trennen, so dass der Strom der übrigen Gleichspannungsleitungen nicht über die Fehlerstelle abfließt. Wird das erfindungsgemäße Verfahren in einem Gleichspannungsnetz verwendet, so können entsprechend als Schaltvorrichtungen Trennschalter eingesetzt werden, was die Betriebskosten des Gleichspannungsnetzes senken kann.

Eine weitere denkbare Methode zur Unterbrechung des Stromes in der fehlerbehafteten Gleichspannungsleitung ist eine aktive Dämpfung der Stromschwingung durch Simulation eines Wellenwiderstandes an den Gleichspannungsanschlüssen des Umrichters. Hierzu wird der Sollwert für den Umrichterstrom auf den gemessenen Istwert gesetzt. Damit kann das Verhalten beim optimalen Weiterlaufen der Welle nachgebildet werden. Das System aus Umrichter und Gleichspannungsleitung verhält sich in diesem Fall wie ein Leitungsabschnitt mit einem Wellenwiderstand. Der Wert des Wellenwiderstandes ist dabei nur von den Leitungsparametern abhängig. Auf diese Weise können Reflexionen am offenen Leitungsende und damit die entstehenden Spannungsüberhöhungen vermieden werden. Der Wert des Wellenwiderstandes kann beispielsweise bereits vor Fehlereintritt hinterlegt sein oder auch während des Betriebes fortwährend gemessen werden. Denkbar ist auch, den Verlauf von Strom und Spannung während eines Fehlers zu nutzen, um den tatsächlichen Wellenwiderstand für den jeweiligen Fehlerfall zu bestimmen und somit das Verhalten des Umrichters dynamisch anzupassen.

Es kann von Vorteil sein, wenn der Umrichter, bei dem das erfindungsgemäße Verfahren eingesetzt wird, ein modularer Mehrstufenumrichter ist, wobei der modulare Mehrstufenumrichter sich zwischen jeweils einem Wechselspannungsanschluss und einem Gleichspannungspol des Umrichters erstreckende Phasenzweige umfasst, wobei die Phasenzweige jeweils eine Reihenschaltung von Submodulen aufweisen. Die Submodule können dabei beispielsweise als sogenannte Vollbrücken ausgebildet sein, wobei jede der Vollbrücken zwei Reihenschaltungen von Leistungshalbleiterschalteinheiten aufweist, wobei jede Leistungshalbleiterschalteinheit eine Parallelschaltung eines Leistungshalbleiters und einer gegensinnig geschalteten Freilaufdiode umfasst. Ferner umfasst die Vollbrücke einen Ener giespeicher in Form eines Hochleistungskondensators, der den beiden Reihenschaltungen parallel geschaltet ist. Durch eine geeignete Ansteuerung der Leistungshalbleiter kann an den Anschlüssen des Submoduls eine Spannung erzeugt werden, die der am Kondensator abfallenden Spannung, der am Kondensator abfallenden Spannung jedoch mit entgegengesetzter Polarität oder der Spannung null entspricht. Beispiele geeigneter Umrichtertopologien sind unter anderen in der WO 2012/103936 A1 beschrieben.

Die Erfindung wird nachfolgend anhand des in den Figuren 1 bis 4 gezeigten Ausführungsbeispiels näher erläutert.
Figur 1 zeigt ein Beispiel eines radialen Gleichspannungsnetzes in schematischer Darstellung.
Figur 2 zeigt ein Beispiel einer Vollbrückenschaltung in schematischer Darstellung.
Figur 3 zeigt ein Beispiel einer Regelungsstrecke in vereinfachter schematischer Darstellung.
Figur 4 zeigt einen Strom- und Spannungsverlauf in der Gleichspannungsleitung des Gleichspannungsnetzes der Figur 1 nach einem Fehlerfall bei Verwendung eines Ausführungsbeispiels eines nicht erfindungsgemäßen Verfahrens.

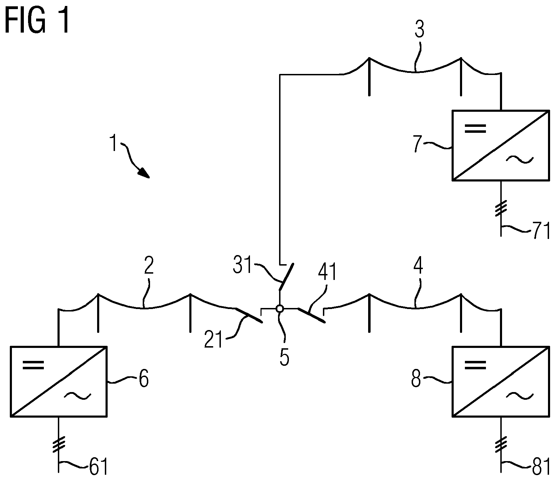

Im Einzelnen ist in Figur 1 ein Beispiel eines einfachen Gleichspannungsnetzes 1 gezeigt. Das Gleichspannungsnetz 1 weist drei Gleichspannungsleitungen 2, 3 und 4 auf, die in einem Knoten 5 miteinander verbunden sind. In dem in Figur 1 dargestellten Gleichspannungsnetz sind die Gleichspannungsleitungen 2, 3, 4 zumindest auf einem Teil ihrer Länge Freileitungen. Die Gleichspannungsleitung 2 verbindet den Knoten 5 mit einem Umrichter 6, der wechselspannungsseitig mit einem Wechselspannungsnetz 61 verbunden ist. Die Gleichspannungsleitung 3 verbindet den Knoten 5 mit einem Umrichter 7, der wechselspannungsseitig mit einem Wechselspannungsnetz 71 ver bunden ist. Entsprechend verbindet die Gleichspannungsleitung 4 den Knoten 5 mit einem Umrichter 8, der wechselspannungsseitig mit einem Wechselspannungsnetz 81 verbunden ist.

Es sei darauf hingewiesen, dass in Figur 1 die Gleichspannungsleitungen 2, 3 und 4 einpolig dargestellt sind. Im Allgemeinen können im Rahmen der Erfindung die Gleichspannungsleitungen jedoch auch zweipolig oder dreipolig sein.

Nah am Knotenpunkt 5 ist in der Gleichspannungsleitung 2 eine Schaltvorrichtung 21 angeordnet. Der Schaltvorrichtung 21 ist dazu eingerichtet, die Gleichspannungsleitung 2 in einem Fehlerfall zu trennen. Entsprechend sind auch in den Gleichspannungsleitungen 3 und 4 ihnen zugeordnete Schaltvorrichtungen 31 bzw. 41 angeordnet. Die Schaltvorrichtungen 21, 31, 41 sind im gezeigten Ausführungsbeispiel aus dem Stand der Technik bekannte Wechselspannungs-Trennschalter von gasisolierten Schaltanlagen.

Der Umrichter 6 weist drei Wechselspannungsanschlüsse sowie zwei Gleichspannungsanschlüsse auf. Zwischen je einem Wechselspannungsanschluss und einem Gleichspannungsanschluss sind Ventilzweige angeordnet, wobei jeder Ventilzweig eine Reihenschaltung sogenannter Submodule aufweist. Jedes Submodul umfasst dabei eine sogenannte Vollbrückenschaltung (H-Brücke). Ein solcher Umrichter ist beispielsweise in der Druckschrift EP 2 454 794 B1 beschrieben.

Der Umrichter 6 verfügt ferner über eine in Figur 1 nicht dargestellte Steuereinheit zur Ansteuerung der Leistungshalbleiter 12 sowie eine Regelungseinheit zur Regelung des Umrichterstromes.

Die übrigen Umrichter 7 und 8 können, müssen aber nicht einen zum Umrichter 6 gleichartigen Aufbau aufweisen.

Es ist von besonderem Vorteil, wenn die übrigen Umrichter des Gleichspannungsnetzes, bei dem dargestellten Beispiel also die Umrichter 7 und 8, derart eingerichtet sind, dass das erfindungsgemäße Verfahren auch zum Unterbrechen des Stromes in den Gleichspannungsleitungen 3 und 4 durchgeführt werden kann. Eine Fehlerstelle in einer der Gleichspannungsleitungen 2, 3, 4 kann dann jeweils beidseitig vom Netz abgetrennt werden.

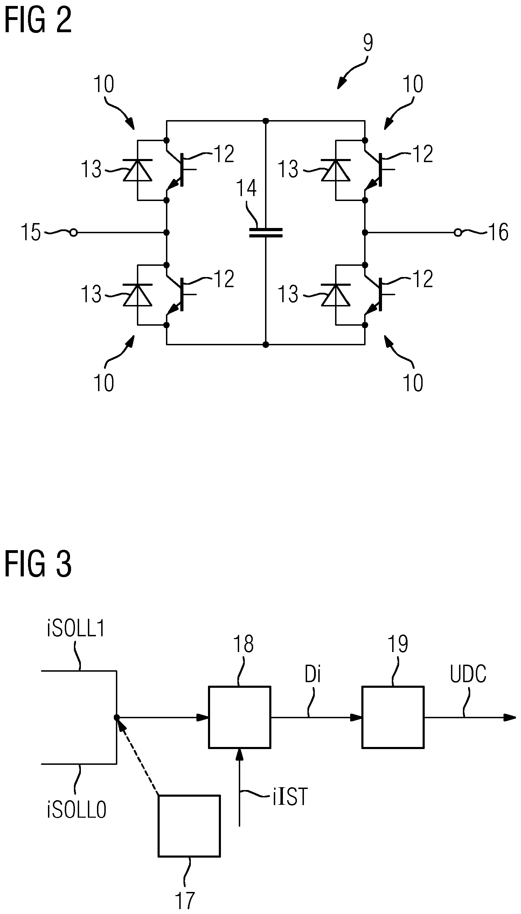

Ein Beispiel einer Vollbrückenschaltung 9 ist in Figur 2 schematisch dargestellt. Die Vollbrückenschaltung 9 weist zwei Reihenschaltungen von Leistungshalbleiterschalteinheiten 10, wobei jede Leistungshalbleiterschalteinheit 10 eine Parallelschaltung eines Leistungshalbleiters 12, im dargestellten Beispiel ein Bipolartransistor mit isolierter Gate-Elektrode (IGBT), und einer gegensinnig geschalteten Freilaufdiode 13 umfasst. Ferner umfasst die Vollbrückenschaltung 9 einen Energiespeicher 14 in Form eines Hochleistungskondensators. Alle Vollbrückenschaltungen des Umrichters 6 sind im gezeigten Beispiel gleichartig ausgebildet. Durch eine geeignete Steuerung der Leistungshalbleiter 12 kann die an den Anschlüssen 15, 16 abfallende Spannung erzeugt werden, die der am Kondensator 14 abfallenden Spannung, der am Kondensator 14 abfallenden Spannung jedoch mit entgegengesetzter Polarität oder der Spannung null entspricht.

Die Ventilzweige des Umrichters 6 sind durch die Reihenschaltung der Vollbrückenschaltungen 9 gebildet, wobei die Vollbrückenschaltungen untereinander mittels der Anschlüsse 15 beziehungsweise 16 miteinander verbunden sind, so dass die an einem der Ventilzweige abfallende Spannung gleich der Summe der Spannungen ist, die an den zugehörigen Submodulen abfallen.

In Figur 3 ist in vereinfachter Form ein Beispiel eines Regelungsvorganges gemäß der Erfindung dargestellt. Dementsprechend wird mittels eines Differenzbildners 18, der ausgangsseitig mit einem Stromregler 19, in diesem Beispiel einem PI-Regler verbunden ist, eine Regeldifferenz Di bereitgestellt. Die Regeldifferenz Di wird aus einem durch Messung des Umrichterstromes gewonnenen Iststromwert iIST und einem Sollstromwert ermittelt. Der Sollstromwert ist dabei ein vorgegebener Stromwert isoll1 eines in einem Normalbetrieb des Umrichters durchgeführten üblichen Regelungsverfahrens oder der Sollstromwert isol0 des erfindungsgemäßen Verfahrens, das im gezeigten Beispiel im Fehlerfall in der Gleichspannungsleitung durchgeführt wird. Im vorliegenden nicht erfindungsgemäßen Beispiel ist isoll0=0. Es kann jedoch von Vorteil sein, wenn isoll0=i0*sin(w*t) mit einer geeigneten Kreisfrequenz w und einer geeigneten Amplitude i0 gewählt wird, wobei t eine Zeitvariable ist. Mittels einer FRT-Vorrichtung 17 kann zwischen den beiden Sollwerten isoll0 bzw. isoll1 geschaltet werden. Der Stromregler 19 stellt an seinem Ausgang eine Stellspannung UDC bereit, die einer Steuervorrichtung zur Ansteuerung der Submodule des Umrichters zugeführt wird.

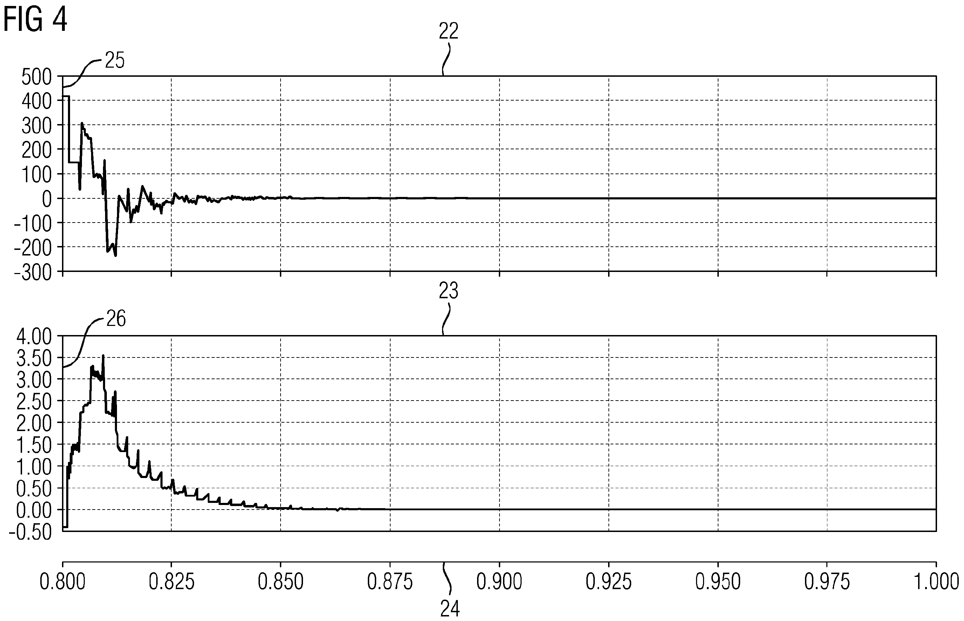

Figur 4 zeigt einen schematischen Verlauf von Spannung und Strom nach einer Unterbrechung der Gleichspannungsleitung 2 der Figur 1. In Figur 4 sind ein oberes Diagramm 22 sowie ein unteres Diagramm 23 erkennbar.

In einem unteren Diagramm 22 der Figur 4 ist eine Abszissenachse 24 erkennbar, die eine Zeitachse darstellt, wobei sich die Zahlenangaben auf Zeit in s (Raster: 25ms) beziehen. Die Abszissenachse 24 gilt für beide Diagramme 22 und 23 der Figur 4. Das obere Diagramm 22 weist eine Ordinatenachse 25 auf, auf der Spannungswerte in kV eingetragen sind. Das untere Diagramm 23 weist entsprechend eine Ordinatenachse 26 auf, auf der Stromwerte in kA eingetragen sind.

Das obere Diagramm 22 zeigt das Beispiel eines Verlaufes einer Spannung, die mittels einer geeigneten Meßvorrichtung in der Nähe der Schaltvorrichtung 21 der Figur 1 ermittelt wird. Dabei entspricht der Zeitpunkt null dem Zeitpunkt, zu dem unmittelbar nach einem Fehler in der Gleichspannungsleitung 2 der Figur 1 der Umrichterstrom des Umrichters 2 auf null geregelt wird. Entsprechend ist im unteren Diagramm 23 der Verlauf des Stromes in der Nähe des Fehlerortes dargestellt. Es ist erkennbar, dass sowohl die Spannung als auch der Strom nach kurzer Zeit auf sehr kleine Werte sinken, so dass die Leitung mittels der Schaltvorrichtung 21 unterbrochen werden kann.

### Bezugszeichenliste

- 1: Gleichspannungsnetz
- 2,3,4: Gleichspannungsleitung
- 21,31,41: Schaltvorrichtung
- 5: Knoten
- 6,7,8: Umrichter
- 61,71,81: Wechselspannungsnetz
- 10: Leistungshalbleiterschalteinheit
- 12: Leistungshalbleiter
- 13: Diode
- 14: Energiespeicher
- 15, 16: Anschluss
- 17: Fault-Ride-Through-Vorrichtung
- 18: Differenzbildner
- 19: Regler
- 22, 23: Diagramm
- 24: Zeitachse
- 25: Spannungsachse
- 26: Stromachse

## Patentansprüche

1. Verfahren zum Unterbrechen eines elektrischen Stromes in einer mit einem Gleichspannungsanschluss eines Umrichters (6) verbundenen Gleichspannungsleitung (2), bei dem in einem Fehlerfall der Gleichspannungsleitung (2) ein gleichspannungsseitiger Umrichterstrom auf einen Stromsollwert geregelt wird, der kleiner als ein Normalbetrieb-Stromsollwert ist und eine gleichspannungsseitige Umrichterspannung auf einen Spannungssollwert geregelt wird, der kleiner als ein Normalbetrieb-Spannungssollwert ist,
der vorgegebene Stromsollwert zumindest zeitweise gleich null gesetzt wird und der vorgegebene Spannungssollwert zeitweise gleich null gesetzt wird, wobei der Stromsollwert einem ersten periodischen Signal mit Nulldurchgängen entspricht, und wobei der Spannungssollwert einem zweiten periodischen Signal mit Nulldurchgängen entspricht,
**dadurch gekennzeichnet, dass**
eine Amplitude des ersten periodischen Signals in der Zeit variiert wird, und dass eine Amplitude des zweiten periodischen Signals in der Zeit variiert wird.

2. Verfahren nach Anspruch 1, wobei die Gleichspannungsleitung (2) mittels einer in der Gleichspannungsleitung (2) angeordneten Schaltvorrichtung (21) getrennt wird.

3. Verfahren nach Anspruch 2, wobei als die Schaltvorrichtung (21) ein Trennschalter verwendet wird.

4. Verfahren nach einem der vorangehenden Ansprüche, wobei das Verfahren eingeleitet wird, wenn eine vorgegebene Fehlerbedingung erfüllt ist.

5. Verfahren nach Anspruch 4, wobei als die Fehlerbedingung ein Überschreiten eines vorgegebenen Stromschwellenwertes oder ein Unterschreiten eines vorgegebenen Spannungsschwellenwertes in der Gleichspannungsleitung (2) verwendet wird.

6. Verfahren nach einem der Ansprüche 4 oder 5, wobei mittels einer in der Gleichspannungsleitung (2) angeordneten Fehlererfassungsvorrichtung überprüft wird, ob die Fehlerbedingung erfüllt ist.

7. Verfahren nach einem der vorangehenden Ansprüche, wobei der gleichspannungsseitige Umrichterstrom mittels einer Messeinheit erfasst und als Iststrom einer ausgangsseitig mit einer Steuereinheit zum Ansteuern von Umrichterventilen verbundenen Regelungseinheit des Umrichters zugeführt wird.

8. Anwendung des Verfahrens nach einem der Ansprüche 1 bis 3 auf ein radiales oder vermaschtes Gleichspannungsnetz (1) mit wenigstens einem Gleichspannungsknoten (5).

## Claims

1. Method for interrupting an electric current in a DC voltage line (2) connected to a DC voltage connection of a converter (6), in which, in the event of a fault with the DC voltage line (2), a DC-voltage-side converter current is regulated to a current setpoint value that is lower than a normal operation current setpoint value and a DC-voltage-side converter voltage is regulated to a voltage setpoint value that is lower than a normal operation voltage setpoint value,
the predetermined current setpoint value is at least intermittently set equal to zero and the predetermined voltage setpoint value is intermittently set equal to zero, wherein the current setpoint value corresponds to a first periodic signal with zero crossings,
and wherein the voltage setpoint value corresponds to a second periodic signal with zero crossings,
**characterized in that**
an amplitude of the first periodic signal is varied over time, and **in that** an amplitude of the second periodic signal is varied over time.

2. Method according to Claim 1, wherein the DC voltage line (2) is disconnected by means of a switching device (21) arranged in the DC voltage line (2).

3. Method according to Claim 2, wherein an isolating switch is used as the switching device (21).

4. Method according to one of the preceding claims, wherein the method is initiated if a predetermined fault condition has been met.

5. Method according to Claim 4, wherein a predetermined current threshold value being exceeded or a predetermined voltage threshold value being fallen below in the DC voltage line (2) is used as the fault condition.

6. Method according to either of Claims 4 and 5, wherein, by means of a fault detection device arranged in the DC voltage line (2), a check is carried out to determine whether the fault condition has been met.

7. Method according to one of the preceding claims, wherein the DC-voltage-side converter current is detected by means of a measuring unit and is supplied as the actual current to a regulation unit of the converter, which regulation unit is connected on the output side to a control unit for actuating converter valves.

8. Application of the method according to one of Claims 1 to 3 to a radial or meshed DC voltage network (1) comprising at least one DC voltage node (5).

## Revendications

1. Procédé d'interruption d'un courant électrique dans une ligne (2) pour la tension continue reliée à une borne pour la tension continue d'un convertisseur (6), dans lequel, si la ligne (2) pour la tension continue est défaillante, on règle un courant de convertisseur du côté de la tension continue à une valeur de consigne de courant, qui est plus petite qu'une valeur de consigne de courant en fonctionnement normal et on règle une tension de convertisseur du côté de la tension continue à une valeur de consigne de tension, qui est plus basse qu'une valeur de consigne de tension en fonctionnement normal,
on met, au moins de temps en temps, égale à zéro la valeur de consigne de courant donnée à l'avance et on met, au moins de temps en temps, égale à zéro la valeur de consigne de tension donnée à l'avance, dans lequel la valeur de consigne de courant correspond à un premier signal périodique ayant des passages par zéro, et dans lequel la valeur de consigne de tension correspond à un deuxième signal périodique ayant des passages par zéro,
**caractérisé en ce que**
on fait varier, dans le temps, une amplitude du premier signal périodique et **en ce que** l'on fait varier, dans le temps, une amplitude du deuxième signal périodique.

2. Procédé suivant la revendication 1, dans lequel on sépare la ligne (2) pour la tension continue au moyen d'un dispositif (21) de coupure monté dans la ligne (2) pour la tension continue.

3. Procédé suivant la revendication 2, dans lequel on utilise un sectionneur comme dispositif (21) de coupure.

4. Procédé suivant l'une des revendications précédentes, dans lequel on lance le procédé si une condition de défaillance donnée à l'avance est satisfaite.

5. Procédé suivant la revendication 4, dans lequel on utilise, comme condition de défaillance, un dépassement d'une valeur de seuil de courant donnée à l'avance ou un passage en-dessous d'une valeur de seuil de tension donnée à l'avance dans la ligne (2) pour la tension continue.

6. Procédé suivant l'une des revendications 4 ou 5, dans lequel on contrôle, au moyen d'un dispositif de détection de défaillance monté dans la ligne (2) pour la tension continue, si la condition de défaillance est satisfaite.

7. Procédé suivant l'une des revendications précédentes, dans lequel on détecte le courant de convertisseur du côté de la tension continue au moyen d'une unité de mesure et on l'envoie comme courant réel à une unité de réglage du convertisseur reliée du côté de la sortie à une unité de commande pour la commande de soupapes du convertisseur.

8. Utilisation du procédé suivant l'une des revendications 1 à 3 sur un réseau (1) pour la tension continue radial ou maillé ayant au moins un nœud (5) pour la tension continue.
